# EUROPÄISCHE PATENTSCHRIFT

(11) **EP 0 579 006 B1**
(45) Veröffentlichungstag und Bekanntmachung des Hinweises auf die Patenterteilung: **17.09.1997**
(21) Anmeldenummer: 93110055.6
(22) Anmeldetag: 24.06.1993
(51) Int. Cl.: B60J 5/04

(54) **Fahrzeugtür**
Vehicle door
Porte de véhicule

(30) Priorität: 06.07.1992 DE 4221795
(43) Veröffentlichungstag der Anmeldung: 19.01.1994
(73) Patentinhaber: YMOS AKTIENGESELLSCHAFT Industrieprodukte, 63179 Obertshausen (DE)
(72) Erfinder: Heim, Gunther, Dipl.-Ing., W-6053 Obertshausen 2 (DE); Kroll, Bruno, Dipl.-Ing., W-5608 Radevormwald (DE)
(74) Vertreter: Schieferdecker, Lutz, Dipl.-Ing.

(56) Entgegenhaltungen:
- EP-A- 0 096 188
- EP-A- 0 142 435
- EP-A- 0 304 769
- DE-A- 3 004 897
- DE-A- 4 026 217

## Beschreibung

Die Erfindung betrifft eine Fahrzeugtür, insbesondere Kraftfahrzeugtür, mit einem tragenden, geschlossenen Hohlquerschnitt aufweisenden Rahmen, der mindestens ein vorderes, ein hinteres und ein oberes Rahmenteil aufweist sowie vorzugsweise mit einem unteren Rahmenteil umlaufend geschlossen ist und als Träger für eine Türaußenhaut, eine Türinnenverkleidung und weitere Türelemente dient, wobei türseitige Scharnierteile am Rahmen insbesondere mittels Schrauben befestigt sind.

Eine entsprechende Kraftfahrzeugtür ist aus der DE-A 30 04 897 bekannt. Dort besteht der umlaufende Rahmen aus zwei abgewinkelten Blechen, die an ihren Längsrändern unter Bildung des geschlossenen Hohlquerschnitts miteinander verschweißt sind. Dabei sind die Bleche als Formteile so gestaltet, daß der Rahmen in verschiedenen Bereichen sehr unterschiedliche Hohlquerschnitte aufweist. Im Anschlußbereich der angeschraubten türseitigen Scharnierteile weist der Rahmen einen speziellen Hohlquerschnitt auf und ist mit einem eingefügten Verstärkungsprofil versehen. Zum Anbringen der Außenhaut weist der Rahmen einen vorspringenden Randflansch auf, an das ein mit dem Türaußenblech verbundenes Distanzblech angeschraubt ist.

Diese bekannte Bauweise mit einem aus Blechpreßteilen zusammengesetzten Rahmen, der gesonderte Verstärkungsprofile für die Anbringung der türseitigen Scharnierteile und besondere Maßnahmen zum Anschließen weiterer Elemente der Tür erfordert, ist vergleichsweise aufwendig.

Dementsprechend liegt der Erfindung die Aufgabe zugrunde eine Fahrzeugtür in Rahmenbauweise zu schaffen, deren Rahmen ausreichend stabil und verwindungssteif ist und eine gute Krafteinleitung ermöglicht sowie bei leichter Ausführung eine einfache Herstellung auch hinsichtlich des Anschlusses der vom Rahmen getragenen Türelemente ermöglicht, was zu einer insgesamt preiswerten Tür führt.

Diese Aufgabe wird ausgehend von der eingangs beschriebenen Fahrzeugtür erfindungsgemäß dadurch gelöst, daß der mit den türseitigen Scharnierteilen versehene Rahmenteil als einstückiges Hohlprofil ausgeführt ist, das einen rechteckigen Querschnitt aufweist.

Zweckmäßige Ausgestaltungen und Weiterbildungen der Erfindung ergeben sich aus den Unteransprüchen.

Das erfindungsgemäß vorgesehene einstückige Hohlprofil ist einfach und preiswert herzustellen. Es ist vergleichsweise leicht und weist trotzdem eine vergleichsweise hohe Festigkeit (Verwindungssteifheit) auf. Durch die rechteckige Profilform ergeben sich Rahmenflächen, an denen sich die Scharnierteile und andere Türelemente unmittelbar anbringen bzw. anschrauben lassen. Die unmittelbare Befestigung der türseitigen Scharnierteile am Rahmen erlaubt es, auf Verstärkungsbleche zu verzichten und insgesamt weniger aufwendig zu konstruieren. Dies ist insbesondere dann möglich, wenn der Rahmen durch ein unteres Rahmenteil umlaufend geschlossen ist. Die leichte Rahmenkonstruktion hat auch Vorteile für die Montage und beim Lackieren des Fahrzeugs. So ist es möglich, eine teilweise montierte Fahrzeugtür mit der Außenhaut zusammen mit der übrigen Karosserie zu lackieren und die Fahrzeugtür dann für die weitere Komplettierung wieder auszubauen und in erst dann erfolgenden Arbeitsgängen fertig zu stellen.

Die Erfindung wird nachfolgend anhand einer schematischen Zeichnung an Ausführungsbeispielen näher erläutert. Es zeigen:
- Fig. 1:: eine schematische Darstellung des Rahmens einer vorderen Fahrzeugtür;
- Fig. 2:: in größerem Maßstab eine schematische Darstellung des Rahmens der Fahrzeugtür in Richtung des Pfeiles A in Fig. 1;
- Fig. 3:: in größerem Maßstab sowie abgebrochen und zum Teil im Schnitt eine Darstellung eines Rahmenteiles mit einem zur Fahrzeugtür gehörenden Scharnierteil;
- Fig. 4:: eine abgebrochene Darstellung wie in Fig. 3 auf das Scharnierteil;
- Fig. 5:: einen Schnitt längs der Linie V-V in Fig. 3;
- Fig. 6:: einen Schnitt wie in Fig. 5 von einer abgewandelten Ausführungsform;
- Fig. 7:: einen Schnitt wie in Fig. 5 von einer weiteren Variante;
- Fig. 8:: eine perspektivische, abgebrochene Darstellung eines Rahmenteiles mit einem zugehörigen Zwischenblech und einem Stück der Türaußenhaut;
- Fig. 9:: eine abgebrochene, perspektivische Darstellung der Teile gemäß Fig. 8 im zusammengefügten Zustand und

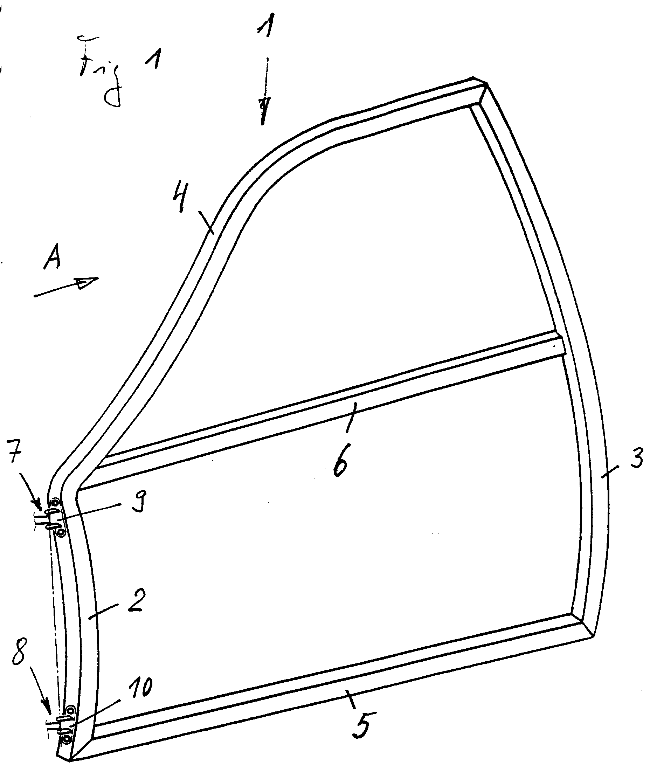

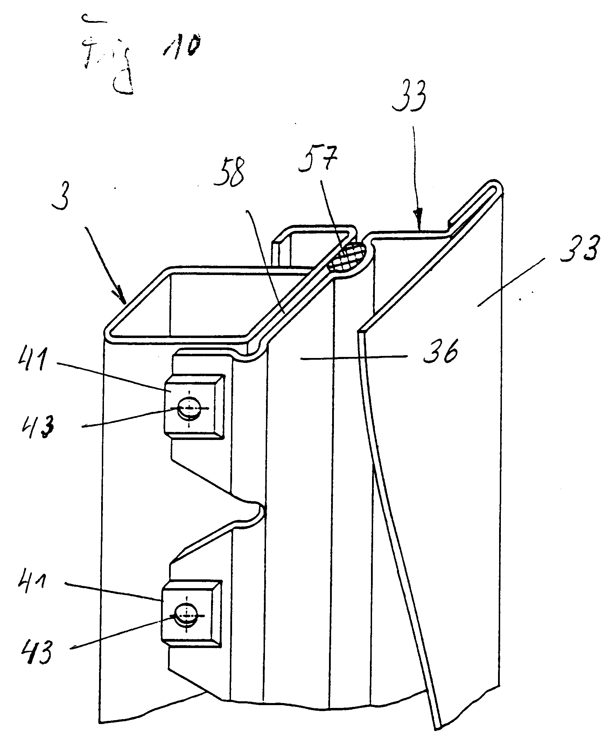

- Fig.1o:: eine Darstellung wie in Fig. 9, wobei die Teile jedoch zum Ausgleich von Fertigungsungenauigkeiten in geringfügig anderer Lage zueinander befestigbar sind.

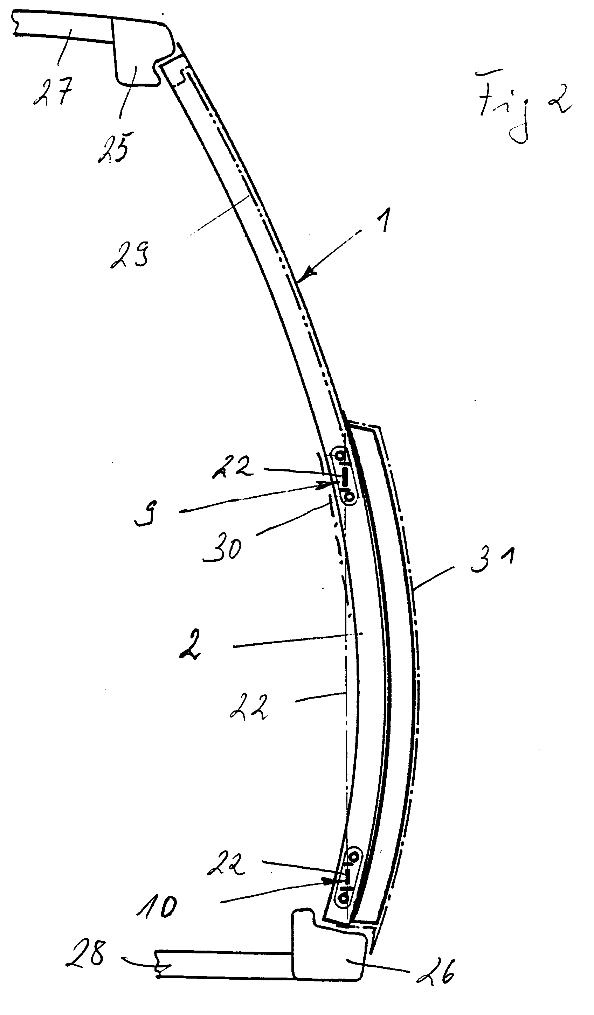

Ein tragender Rahmen 1 gemäß Fig. 1 für eine Fahrzeugtür umfasst ein vorderes Rahmenteil 2, ein hinteres Rahmenteil 3, ein oberes Rahmenteil 4 und gemäß Ausführungsbeispiel vorzugsweise ein unteres, den Rahmen 1 schließendes Rahmenteil 5. Ferner ist ein Fensterrahmenteil 6 vorgesehen. Zur schwenkbaren Befestigung der Fahrzeugtür am Kraftfahrzeug bzw. an der Fahrzeugzelle dienen Scharniere 7 und 8. Die türseitigen Scharnierteile 9 und 1o sind unmittelbar am Rahmen 1 befestigt, wie aus Fig. 1 hervorgeht. Hierzu sind die Scharnierteile 9 und 1o an dem vorderen Rahmenteil 2 vorzugsweise angeschraubt, wie auch aus den Figuren 2 - 7 hervorgeht.

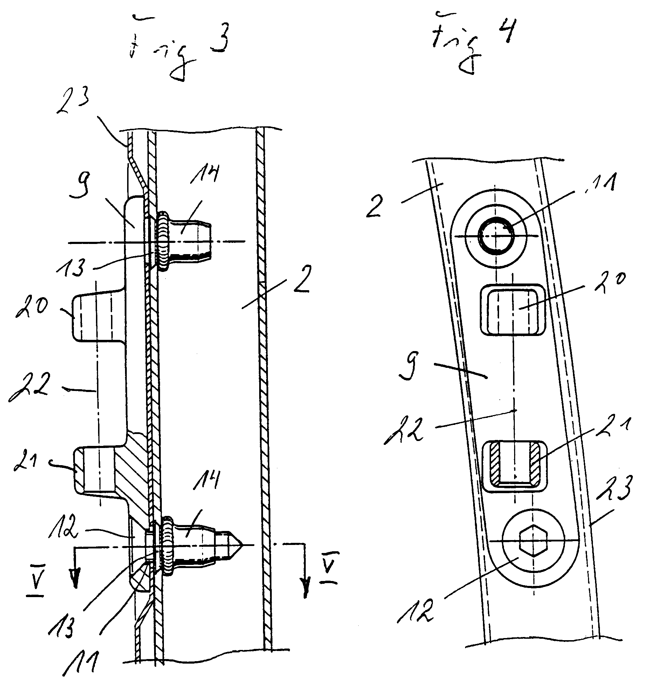

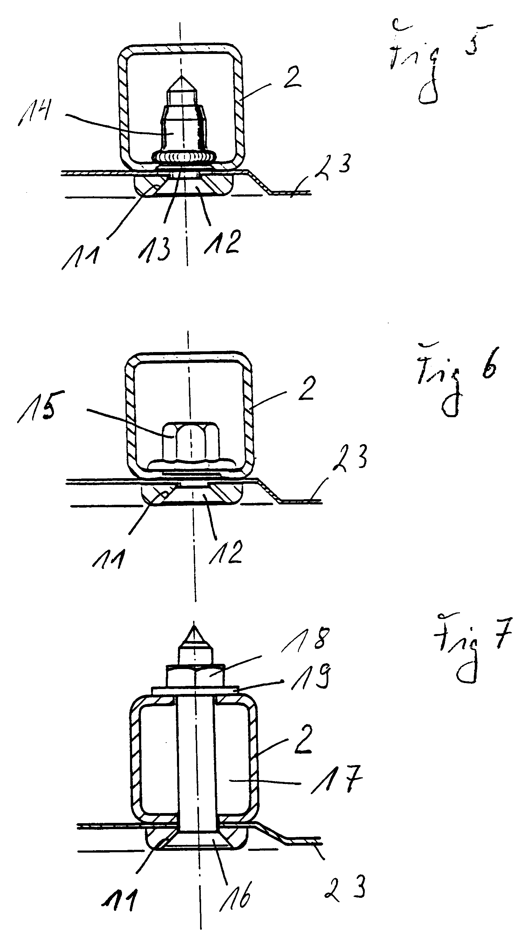

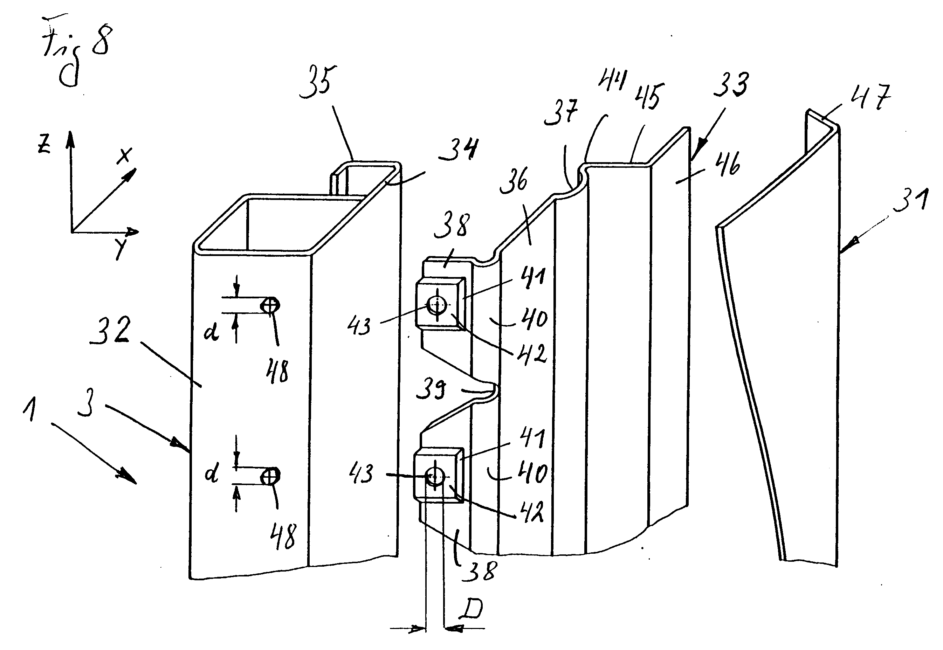

Zum Befestigen weist jedes Scharnierteil 9 bzw. 1o Durchtrittsöffnungen 11 z.B. zur Aufnahme von Senkkopfschrauben 12 auf. Auch im Rahmenteil 2 befinden sich Durchtrittsöffnungen 13, wobei deren lichter Querschnitt davon abhängig ist, auf welche Art und Weise die Senkkopfschrauben 12 am Rahmenteil 2 gesichert werden. Gemäß der in den Figuren 3 und 5 dargestellten Ausführungsform sind hierzu Nietmuttern 14 vorgesehen, die auch durch die Durchtrittsöffnungen 13 in das Innere des Rahmenteiles 2 eingeführt werden müssen und sich beim Anziehen der Senkkopfschrauben 12 aufspreizen und sich jeweils hinter den Rand der Durchtrittsöffnungen 13 legen.

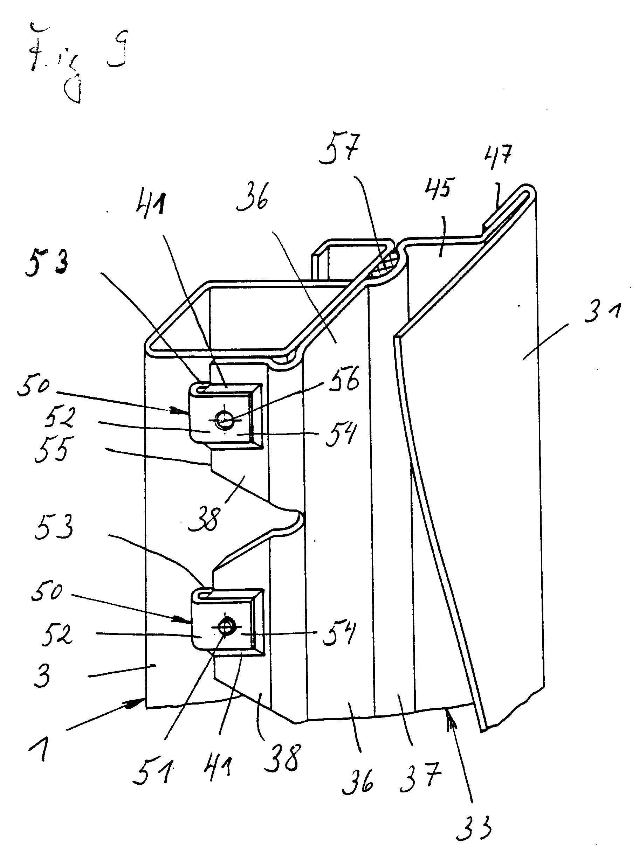

Fig. 6 zeigt eine abgewandelte Nietmutter 15 und Fig. 7 betrifft den Fall, daß die Senkkopfschraube 16 nicht im Inneren 17 des Rahmenteiles 2 mit Hilfe einer Mutter 18 gesichert ist, wie im Falle der Nietmuttern 14 und 15 bei den Ausführungsbeispielen gemäß den Fig. 5 und 6. Gemäß Fig. 7 durchgreift die Senkkopfschraube 16 vielmehr das gesamte Rahmenteil 2 und ist auf dessen abgewandten Seite mit Hilfe einer passenden Mutter 18 mit Flansch oder Beilegscheibe 19 fixiert.

Die beiden Figuren 3 und 4 zeigen schließlich noch zum Teil geschnitten die beiden Lagerstellen 2o und 21 für einen nicht dargestellten, sich in Richtung der Achse 22 erstreckenden Scharnierzapfen.

Auch ein nur Dekorationszwecken dienendes Verkleidungs- oder Scharnierblech 23 kann gemäß der Darstellung in den Figuren 3 - 7 vorgesehen sein und ist zwischen den Scharnierteilen 9 und 1o und dem Rahmenteil 2 eingeklemmt.

Fig. 1o zeigt schematisch den Türrahmen 1 mit den Scharnierteilen 9 und 1o in einer Sicht von vorne entsprechend dem Pfeil A in Fig. 1, wobei ebenfalls nur schematisch ein Dach-Längsträger 25, ein Boden-Längsträger 26 und Querstreben 27 und 28 der Fahrzeugkarosserie ebenso wie ein Seitenfenster 29 angedeutet sind. Auch eine Türinnenverkleidung 3o und eine Türaußenhaut 12 sind ebenso, wie weitere, hier nicht interessierende Türelemente vorgesehen und am Rahmen 1 befestigt. Dabei erfolgt die Befestigung der Türaußenhaut 31 am Rahmen 1 derart, daß eine Einstellung der Türaußenhaut 31 relativ zum Rahmen 1 möglich ist. Dies geschieht vorzugsweise mit Hilfe von Schrauben bzw. unter Verwendung von weiteren Haltemitteln, wie dies im einzelnen aus den Fig. 8 - 1o hervorgeht.

Fig. 8 zeigt in perspektivischer Darstellung ein abgeschnittenes Stück 32 des Rahmenteiles 3 des in Fig. 1 dargestellten Rahmens 1 und im Abstand davon ein abgeschnittenes Stück 32 eines Zwischenstückes 33, mit dessen Hilfe die Türaußenhaut 31 im Bereich des Rahmenteiles 3 an dem Rahmen 1 befestigt wird.

Bei dem Rahmenteil 3 handelt es sich im wesentlichen um ein Rechteckprofil mit einem Schenkel 34, an dem sich ein Winkelstücke 35 befindet.

Das Zwischenstück 33 umfasst einen mittleren Steg 36 mit einer Verstärkungssicke 37 und mit Laschen 38 längs des einen Randes 39. Gemäß Anwendungsfall bzw. entsprechend dem in den Fig. 8 - 1o dargestellten Ausführungsbeispiel sind die Laschen 38 gegenüber dem mittleren Steg 36 abgewinkelt. Zweckmäßigerweise geschieht dies jeweils unter Verwendung eines zwischen dem mittleren Steg 36 und der jeweiligen Lasche 38 befindlichen Bogenstückes 4o.

Die Laschen 38 weisen Verprägungen 41 mit einer Anlagefläche 42 auf. In der Anlagefläche 42 befindet sich je eine Durchtrittsöffnung 43 mit einem Durchmesser D.

Am anderen Längsrand 44 des mittleren Steges 36 des Zwischenstückes 33 schließt ein Winkelstück 45 an, dessen einer Schenkel 46 zum Verbördeln mit einem Randstück 47 der Türaußenhaut 31 dient, wie auch aus den Fig. 9 und 1o hervorgeht.

Entsprechend der Lage der Durchtrittsöffnungen 43 in den Laschen 38 des Zwischenstückes 33 weist auch das Rahmenteil 3 Durchtrittsöffnungen 48 mit einem Durchmesser d auf. Der Durchmesser D der Durchtrittsöffnungen 43 in den Laschen 38 ist größer als der Durchmesser d der Durchtrittsöffnungen 48 im Rahmenteil 3. Das Zwischenstück 33 ist daher entsprechend der Differenz der Durchmesser D und d in Richtung der Achsen z und y relativ zum Rahmenteil 3 einstellbar, wenn eine Befestigung mit Hilfe von die Durchtrittsöffnungen 43 und 48 durchgreifenden Befestigungsmitteln erfolgt.

Wesentlich ist, daß das Zwischenstück 33 und somit die Türaußenhaut 31 unter Verwendung von eine Einstellung der Türaußenhaut 31 relativ zum Rahmen 1 erlaubenden Haltemitteln am Rahmen 1 befestigbar ist. Die Verwendung von Durchtrittsöffnungen 43 und 48 unterschiedlicher Größe in Verbindung mit durchgreifenden Befestigungsmitteln z.B. in Gestalt von Schrauben ist eine Möglichkeit für ein einstellbares Haltemittel 50 für die Türaußenhaut 31 am Rahmen 1. Andersartige Haltemittel sind grundsätzlich auch denkbar.

Gemäß Ausführungsbeispiel soll nicht nur jeweils eine Schraube 51 die beiden Durchtrittsöffnungen 43 und 48 durchgreifen und somit das Zwischenstück 33 am Rahmenteil 3 fixieren, sondern es ist ferner die Verprägung 41 vorgesehen, die je zur lagemäßigen Fixierung einer zusätzlichen Halteklammer 52 dient. Die klippartige Halteklammer 52 ist im Querschnitt U-förmig und besteht aus zwei miteinander verbundenen Federschenkeln 53 und 54. Der eine Federschenkel 53 liegt im konkaven Teil der Verprägung 41 und der andere Schenkel 54 liegt auf der Anlagefläche 42 der Verprägung 41 auf. Die Verprägung 41 erstreckt sich ferner kanalförmig vom äußeren Rand 55 in die jeweilige Lasche 38 hinein, so daß die im Querschnitt U-förmige Halteklammer 52 den Rand 55 der Lasche 38 umgreift und durch die Verprägung 41 dabei lagemäßig fixiert ist.

Der eine Schenkel 53 der Halteklammer 52 weist für die Schraube 51 eine Durchtrittsöffnung auf und im anderen Schenkel 54 befindet sich ein Gewinde 56 für die Schraube 51. Die Halteklammer 52 besitzt daher auch die Funktion einer Mutter, da die zum Befestigen dienende Schraube 51 mit Hilfe der Halteklammer 52 bzw. des in ihr befindlichen Gewindes 56 gehalten wird.

Im zusammengebauten Zustand ist die Türaußenhaut 31 gemäß Fig. 9 verbördelt und liegt mit ihrem Steg 36 am Rahmenteil 3 an. Dies stellt für die mögliche Einstellbarkeit in Z-und Y-Richtung die eine Extremstellung dar. Die Verstärkungssicke 37 dient dabei ferner zur Aufnahme eines Dichtungsstreifens 57, der in der Position gemäß Fig. 9 stark zusammengedrückt ist. Moosgummi wird daher zweckmäßigerweise als Werkstoff für den Dichtungsstreifen 57 verwendet.

Fig. 1o zeigt eine Befestigung der Türaußenhaut 33 am Rahmenteil 3 in einer anderen Extremstellung, wobei der Steg 36 des Zwischenstückes 33 im Abstand von dem Rahmenteil 3 bzw. dessen ihm zugewandten Anlagefläche 58 steht.

Die Laschen 38 sind vorzugsweise gegenüber dem Steg 36 des Zwischenstückes 33 flexibel und es versteht sich, daß die als durchgreifendes Befestigungsmittel dienenden Schrauben 51 einen Querschnitt aufweisen, der geringer ist als der Durchmesser D der Durchtrittsöffnungen 43.

Dennoch sind mannigfache Abwandlungen mögliche, ohne von dem grundsätzlichen Erfindungsgedanken abzuweichen. Wesentlich ist in diesem Zusammenhang, daß es mit Hilfe der geschilderten Maßnahmen möglich ist, alle wesentlichen Baukomponenten einer Fahrzeugtür am Rahmen 1 unmittelbar oder mittelbar zu bestigten. Bisher war es bei Kraftfahrzeugtüren nur möglich, an gegebenenfalls verwendeten Rahmen die verschiedenen, mechanischen Elemente der Kraftfahrzeugtür zu befestigen und den derart versehenen Rahmen sodann in einen kastenartigen Außenhaut-Modul einzusetzen und mit diesem zu verbinden.

## Patentansprüche

1. Fahrzeugtür, insbesondere Kraftfahrzeugtür, mit einem tragenden, geschlossenen Hohlquerschnitt aufweisenden Rahmen (1), der mindestens ein vorderes, ein hinteres und ein oberes Rahmenteil (2, 3, 4) aufweist sowie vorzugsweise mit einem unteren Rahmenteil (5) umlaufend geschlossen ist und als Träger für eine Türaußenhaut (31), eine Türinnenverkleidung (30) und weitere Türelemente dient, wobei türseitige Scharnierteile (9, 10) am Rahmen (1) insbesondere mittels Schrauben (12, 16) befestigt sind, **dadurch gekennzeichnet**, daß der mit den türseitigen Scharnierteilen (9, 10) versehene Rahmenteil (2) als einstückiges Hohlprofil ausgeführt ist, das einen rechteckigen Querschnitt aufweist.

2. Fahrzeugtür nach Anspruch 1, **dadurch gekennzeichnet**, daß alle Rahmenteile (2, 3, 4, 5) des Rahmens (1) als einstückige Hohlprofile mit rechteckigem Querschnitt ausgeführt sind.

3. Fahrzeugtür nach Anspruch 1 oder 2, bei der die Türaußenhaut (31) mit Hilfe eines Zwischenstücks (33) am Rahmen (1) befestigt, insbesondere angeschraubt, ist **dadurch gekennzeichnet**, daß die Türaußenhaut (31) unter Verwendung von eine Einstellung der Türaußenhaut (31) relativ zum Rahmen (1) erlaubenden Haltemitteln (50) am Rahmen (1) befestigt ist.

4. Fahrzeugtür nach Anspruch 2, **dadurch gekennzeichnet**, daß Durchtrittsöffnungen (43) zur Befestigung der Türaußenhaut (31) vorgesehen sind und daß der lichte Querschnitt (D) der Durchtrittsöffnungen (43) größer ist als der Querschnitt (d) der die Durchtrittsöffnungen (43) durchgreifenden Befestigungsmittel, die vorzugsweise Schrauben (51) sind.

5. Fahrzeugtür nach Anspruch 3 oder 4, **dadurch gekennzeichnet**, daß zur Befestigung der Türaußenhaut (31) am Rahmen (1) Halteklammern (52) vorgesehen sind, die im Querschnitt U-förmig sind.

6. Fahrzeugtür nach einem der Ansprüche 3 bis 5, **dadurch gekennzeichnet**, daß das Zwischenstück (33) rahmenseitig zur Befestigung am Rahmen (1) dienende Laschen (38) aufweist, die vorzugsweise abgewinkelt und flexibel sind.

7. Fahrzeugtür nach Anspruch 4 und 6, **dadurch gekennzeichnet**, daß die Laschen (38) die Durchtrittsöffnungen (43) mit dem größeren Querschnitt (D) aufweisen.

8. Fahrzeugtür nach Anspruch 5 und 6 oder 7, **dadurch gekennzeichnet**, daß die Laschen (38) Verprägungen (41) aufweisen, die jeweils einen Schenkel (53) der Halteklammern (52) aufnehmen.

9. Fahrzeugtür nach einem der Ansprüche 3 bis 8, **dadurch gekennzeichnet**, daß das Zwischenstück (33) einen Steg (36) mit einer Verstärkungssicke (37) aufweist, die vorzugsweise einen Dichtungsstreifen (57) aufnimmt.

## Claims

1. A vehicle door, in particular a motor vehicle door, comprising a load-bearing frame (1) which is of a closed hollow cross-section and which has at least a front, a rear and an upper frame portion (2, 3, 4) and which is preferably peripherally closed with a lower frame portion (5) and which serves as a carrier for a door outer skin (31), a door inner lining (30) and further door elements, wherein hinge members (9, 10) on the door are fixed to the frame (1) in particular by means of screws (12, 16), characterised in that the frame portion (2) provided with the hinge members (9, 10) on the door is in the form of an integral hollow profile of a rectangular cross-section.

2. A vehicle door according to claim 1 characterised in that all frame portions (2, 3, 4, 5) of the frame (1) are in the form of integral hollow profiles of rectangular cross-section.

3. A vehicle door according to claim 1 or claim 2 wherein the door outer skin (31) is secured to the frame (1) by means of an intermediate portion (33), in particular being screwed thereto, characterised in that the door outer skin (31) is secured to the frame (1) using holding means (50) which permit adjustment of the door outer skin (31) relative to the frame (1).

4. A vehicle door according to claim 2 characterised in that through openings (43) are provided for securing the door outer skin (31) and that the internal cross-section (D) of the through openings (43) is larger than the cross-section (d) of the securing means which engage through the through openings (43) and which are preferably screws (51).

5. A vehicle door according to claim 3 or claim 4 characterised in that holding clips (52) which are of U-shaped cross-section are provided for securing the door outer skin (31) to the frame (1).

6. A vehicle door according to one of claims 3 to 5 characterised in that the intermediate portion (33) has on the frame side tongues (38) which serve for securing to the frame (1) and which are preferably angled and flexible.

7. A vehicle door according to claim 4 and claim 6 characterised in that the tongues (38) have the through openings (43) of the larger cross- section (D).

8. A vehicle door according to claim 5 and claim 6 or claim 7 characterised in that the tongues (38) have impression portions (41) which respectively receive a limb (53) of the holding clips (52).

9. A vehicle door according to one of claims 3 to 8 characterised in that the intermediate portion (33) has a leg (36) with a reinforcing bead (37) which preferably receives a sealing strip (57).

## Revendications

1. Porte de véhicule, notamment porte de véhicule automobile, comportant un châssis de support (1) présentant une section transversale creuse fermée qui présente au moins des parties de châssis avant, arrière et supérieure (2, 3, 4) et qui est fermé tout autour de préférence par une partie de châssis inférieure (5) et qui sert de support à une peau extérieure de porte (31), un revêtement intérieur de porte (30) et d'autre éléments de porte, des pièces de charnière côté porte (9, 10) étant fixées au châssis (1), notamment par des boulons (12, 16), caractérisée en ce que la partie de châssis (2) pourvue des pièces de charnière (9, 10) côté porte est réalisée sous forme de profilé creux en une pièce qui présente une section transversale rectangulaire.

2. Porte de véhicule selon la revendication 1, caractérisée en ce que toutes les parties de châssis (2, 3, 4, 5) du châssis (1) sont réalisées sous forme de profilé creux en une pièce d'une section transversale rectangulaire.

3. Porte de véhicule selon la revendication 1 ou 2, où la peau extérieure de porte (31) est fixée, notamment vissée à l'aide d'une pièce intermédiaire (33) au châssis (1), caractérisée en ce que la peau extérieure de porte (31), en utilisant des moyens de retenue (50) permettant un réglage de la peau extérieure de porte (31) relativement au châssis (1) est fixé au châssis (1).

4. Porte de véhicule selon la revendication 2, caractérisée en ce que sont prévues des ouvertures de passage (43) pour la fixation de la peau extérieure de porte (31) et en ce que la section transversale intérieure (D) des ouvertures de passage (43) est plus grande que la section transversale (d) des moyens de fixation passant à travers les ouvertures de passage (43), moyens constitués de préférence de boulons (51).

5. Porte de véhicule selon la revendication 3 ou 4, caractérisée en ce que sont prévues pour la fixation de la peau extérieure de porte (31) au châssis (1) des pinces de retenue (52) qui sont configurées en U en section transversale.

6. Porte de véhicule selon l'une des revendications 3 à 5, caractérisée en ce que la pièce intermédiaire (33) présente, côté châssis, des languettes (38) servant à la fixation sur le châssis (1) qui sont de préférence coudées et flexibles.

7. Porte de véhicule selon la revendication 4 et 6, caractérisée en ce que les languettes (38) présentent les ouvertures de passage (43) ayant la section transversale plus grande (D).

8. Porte de véhicule selon la revendication 5 et 6 ou 7, caractérisée en ce que les languettes (38) présentent des gaufrages (41) qui reçoivent respectivement une branche (53) des pattes de retenue (52).

9. Porte de véhicule selon l'une des revendications 3 à 8, caractérisée en ce que la pièce intermédiaire (33) présente une barrette (36) avec une moulure de renforcement (37) qui reçoit de préférence une bande d'étanchéité (57).
